# EUROPEAN PATENT SPECIFICATION

(11) **EP 2 998 242 B1**
(45) Date of publication and mention of the grant of the patent: **22.03.2017**
(21) Application number: 14797880.3
(22) Date of filing: 27.01.2014
(51) Int. Cl.: B65D 85/804, A47J 31/06, A47J 31/36

(54) **DRINKS PREPARATION CAPSULE STRUCTURE**
HERSTELLUNG VON GETRÄNKEN MIT KAPSELSTRUKTUR
STUCTURE DE CAPSULE POUR PRÉPARATION DE BOISSON

(30) Priority: 17.05.2013 ES 201330709
(43) Date of publication of application: 23.03.2016
(73) Proprietor: Cocatech, S.L.U., 28001 Madrid (ES)
(72) Inventor: FLORES ARNAIZ, Jesús Guillermo, E-26300 Najera (La Rioja) (ES); FERNÁNDEZ SAENZ, Pedro, E-26300 Najera (La Rioja) (ES)
(74) Representative: Ungria López, Javier
(86) International application number: PCT/ES2014/070053
(87) International publication number: WO 2014/184404

(56) References cited:
- EP-A1- 1 837 294
- EP-A1- 2 444 339
- WO-A1-2012/168764
- WO-A1-2013/124234
- WO-A2-2006/021405
- ES-A1- 2 398 276
- ES-A1- 2 398 276
- ES-T3- 2 347 286
- ES-T3- 2 394 373
- ES-T3- 2 394 373
- ES-T3- 2 400 205
- US-A1- 2011 064 852

## Description

### OBJECT OF THE INVENTION

The invention consists of a capsule structure for preparing alimentary beverages, which comprises a filter plate inside the external container of the capsule, wherein the geometry of said filter plate is such that it is capable of absorbing, more efficiently than in the case of other filter plates known in state of the art, the internal stress generated inside the capsule as a consequence of the increase in pressure resulting from the injection of an external liquid.

In general, the invention is applicable for obtaining beverages by means of capsules that contain an alimentary product and which are injected with a fluid under pressure, more particularly for obtaining infusions, and more specifically for making coffee.

### BACKGROUND ART

In the state of the art, various documents can be cited which relate to capsules for preparing beverages wherein, after mixing a liquid under pressure, normally hot water, with a particular alimentary product, usually coffee, this mixture is filtered inside of the capsule through a filter plate.

In this regard, it is worth citing the document corresponding to the Spanish patent, whose publication number is ES 2398276 A1, wherein a capsule for making a beverage is described, the interior of which comprises a filter plate, which is set upon an inner lip of the external container of the capsule, thus giving the capsule an internal means of filtering, before the alimentary beverage exits the capsule.

However, due to the high levels of pressure reached inside the capsules for preparing alimentary beverages when a liquid under pressure is injected into their interior, said filter plates often become destabilized and shift inside the external container due to the stress to which they are exposed.

The present invention is able to mitigate the aforementioned destabilizing effect, as it provides a capsule structure for preparing beverages comprising a filter plate with a special geometry that fits into a specific geometry of the external container of the capsule, thus achieving optimal absorption of the internal stress generated inside the capsule.

The document corresponding to Spanish patent ES2394373 may also be cited, which describes a disposable capsule for preparing a beverage, which is characterized in that it incorporates means to perforate the top film or lid.

It also includes in a preferred embodiment a separating element, which may take on various dimensions.

This separator does not include a reinforced structure, as it is set in its entirety upon the inner surface of the body of the capsule.

It likewise lacks means for placing any sort of membrane.

Its filtering surface is ineffective, insomuch as it must be combined with sheets of filter paper, placed upon its top surface.

It is also worth citing the document corresponding to the Spanish patent whose publication number is ES2398276, belonging to the present applicant, which relates to a capsule for preparing beverages that includes a filter plate located immediately above the lower base of the capsule, although it does not have a side wall and as such does not delimit a central chamber for the fluid to pass through, nor does it include means for the use of membranes, which break under the effects of pressure.

Its filtering surface is smooth but with a slight convergence toward the center which acts like a funnel, such that it fits into the shape of the base of the capsule, without defining ribbed areas or sections, to ensure proper resistance to the pressure produced inside the capsule while the beverage is being formed.

### DESCRIPTION OF THE INVENTION

The present invention relates to a capsule structure for preparing beverages, of the type of capsule into which a liquid under pressure is injected, which comprises an external container of the capsule and a filter plate that is set inside of said external container and fits into the geometry of said external container, wherein the external container comprises a holding chamber for the alimentary product, under which the filter plate is located, wherein the external container comprises an internal wall and a bottom, wherein:
- the filter plate comprises at least:
   - a filtering area that is open on the top, with a wall that is set upon the interior wall of the external container and a base that comprises a plurality of holes;
   - an inner chamber, located immediately below the filtering area, into which the liquid mixed together with the alimentary product enters through the holes of the filtering area, wherein said inner chamber is delimited from below by a membrane, designed to break under the effect of pressure, when the pressure inside said inner chamber reaches a certain level;
- a lower area, the top section of which comprises a lip and a hollow geometry with an interior space, a side wall and an edge of said side wall, which is set upon the bottom of the external container;
- the external container comprises, internally, on its bottom, several ridges and several teeth, the ridges being joined to the internal wall of the external container, and the teeth are located on the bottom of the external container, arranged concentrically with respect to the ridges;
and wherein:
- the edge of the side wall of the lower area of the filter plate is inserted between said ridges and said teeth on the bottom of the external container, such that the filter plate fits tightly between said ridges and said teeth,
- the membrane that delimits the inner chamber is sealed over a location chosen between the lip, provided in the top section of the lower area, such that the membrane separates the lower area from the inner chamber; and a location over the bottom of the external container, such that the inner chamber is constituted by the lower area itself;
- the base of the filtering area of the filter plate comprises a plurality of radial ridges, which run radially across the base of the filtering area, from the wall of the filtering area to the center of the filtering area, wherein the geometry of said radial ridges is like a dividing wall with an edge that protrudes above the base of the filtering area and an edge that protrudes below the base of the filtering area, such that said radial ridges penetrate into the inner chamber of the filter plate till a depth to be chosen between partial penetration, when the membrane is sealed over the lip, and a penetration down through the lower area, when the membrane is sealed over the bottom of the external container;
- the base of the filtering area of the filter plate is divided into two areas:
   - a central area, which comprises the holes;
   - a ring-shaped area, between the central area and the wall of the filtering area, located at a lower level than the central area of the base and through which the radial ridges run.

It is worth noting that the configuration wherein the inner chamber is constituted by the lower area itself, wherein the radial ridges penetrate all the way through the lower area, wherein the membrane is sealed over the bottom of the external container, is more advantageous than the embodiment in which the radial ridges penetrate partially into the interior of the inner chamber of the filter plate, wherein the membrane is sealed over the lip provided in the top section of the lower area; as it provides a reinforced structure for the filter plate which also simplifies the placement of the membrane, while at the same time improving the mixing process by providing a larger inner chamber.

According to a preferred embodiment of the present invention, the wall of the filtering area of the filter plate comprises two frustoconical segments, one upper segment and one lower segment, the generatrices of each one of them having a certain angle of inclination, and the geometry of the side wall of the lower area of the filter plate is cylindrical.

Preferably, between the filter plate and the external container of the capsule there is an air chamber delimited from below by the bottom of the external container, from the side by the side wall of the lower area of the filter plate, and from above by the wall of the filtering area of the filter plate.

Likewise, the edge of the side wall of the lower area of the filter plate comprises a number of openings so that a pressure gradient does not form between the internal space of the lower area of the filter plate and the air chamber.

The location of the ring-shaped area of the filtering area corresponds to the lip of the lower area of the filter plate.

The geometry of the radial ridges is convex on the edge that protrudes above the central area of the base of the filtering area.

According to a preferred embodiment of the present invention, the filter plate comprises a plurality of ribs in the ring-shaped area of the filtering area, arranged radially and alternating with the radial ridges.

The geometry of the cross-section of the holes in the base of the filtering area is preferably frustoconical.

The inside of the inner chamber usually comprises a mixture of aromas, which impregnate the alimentary beverage as it passes through said inner chamber.

The invention provides that the external face of the bottom of the external container of the capsule may comprise a plurality of radial reinforcement ridges. This configuration offers the advantage of providing greater rigidity to the external container of the capsule, which keeps the internal pressure that it must withstand from deforming it.

It is provided that the plurality of radial reinforcement ridges on the external face of the bottom of the external container be connected by at least one concentric circular ridge that provides greater rigidity.

In addition, the invention provides that the radial ridges and the ribs provided in the filter plate, which have been described above, extend along the lower face of the lower frustoconical segment of the wall of the filter plate according to several brackets, without reaching the upper frustoconical segment of said wall, and also continue along the outside of the side wall of the lower area without reaching its edge, thus offering greater reinforcement. These brackets, in the case of the ribs, also extend along the inside of the side wall of the lower area, so as to provide greater rigidity.

In a preferred embodiment, both the external container and the filter plate are made out of a plastic material, usually using an injection method.

### SUMMARY OF THE DRAWINGS

Figure 1.- Shows a perspective view from above of the filter plate comprised in the present capsule structure for preparing beverages.
Figure 2.- Shows a bottom view of the filter plate shown in figure 1.
Figure 3.- Shows a cross-section of the filter plate shown in figures 1 and 2.
Figure 4.- Shows a perspective view from above of a cross-section of the external container comprised in the present capsule structure for preparing beverages.
Figure 5.- Shows an elevation view of a cross-section of the filter plate mounted inside the external container.
Figure 6.- Shows a perspective view from above of a cross-section of the filter plate mounted inside the external container.
Figure 7.- Shows a perspective view from below of a cross-section of the filter plate mounted inside the external container.
Figure 8.- Shows a perspective view from above of a second exemplary embodiment of the filter plate.
Figure 9.- Shows a perspective view from above of a cross-section of a second exemplary embodiment of the external container, upon which the filter plate of figure 8 is mounted.
Figure 10.- Shows a perspective view from above of a cross-section of the filter plate mounted inside the external container of the second exemplary embodiment.
Figure 11.- Shows a perspective view from below of the external container of the second embodiment.

### DESCRIPTION OF THE PREFERRED EMBODIMENTS

The present invention relates to a capsule structure (3) for preparing beverages which comprises an external container (1) of the capsule (3), with an internal wall (5) and a bottom (6), and a filter plate (2) which fits into the inside of the external container (1) of the capsule (3).

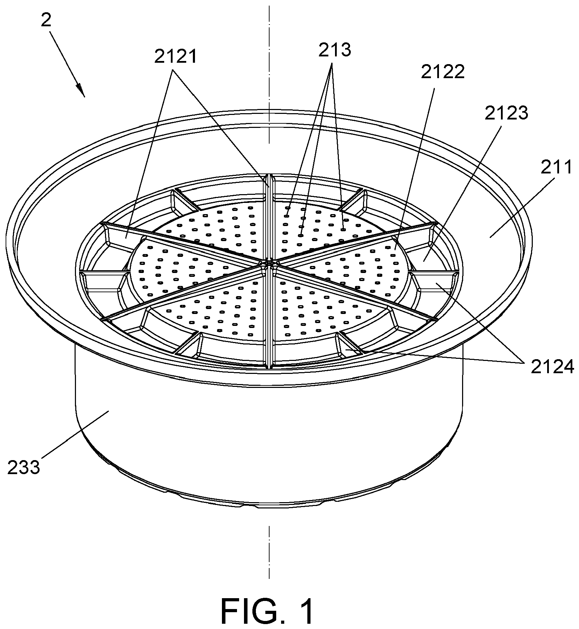

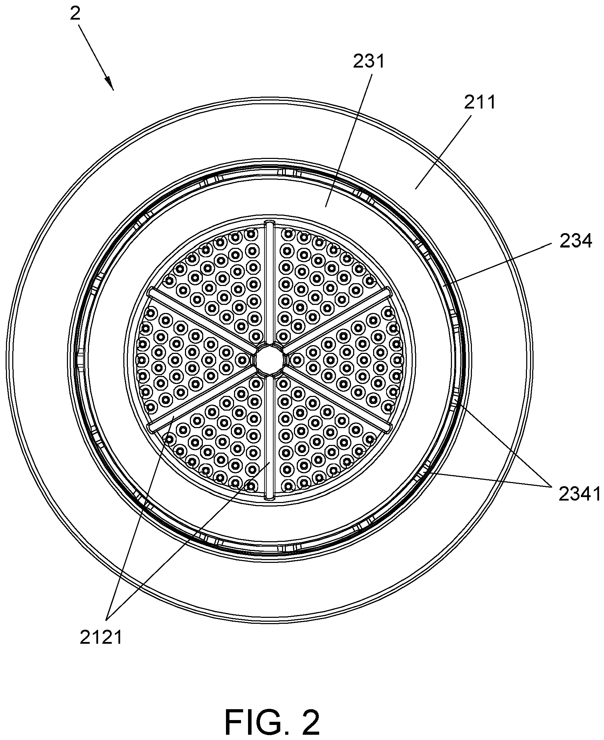

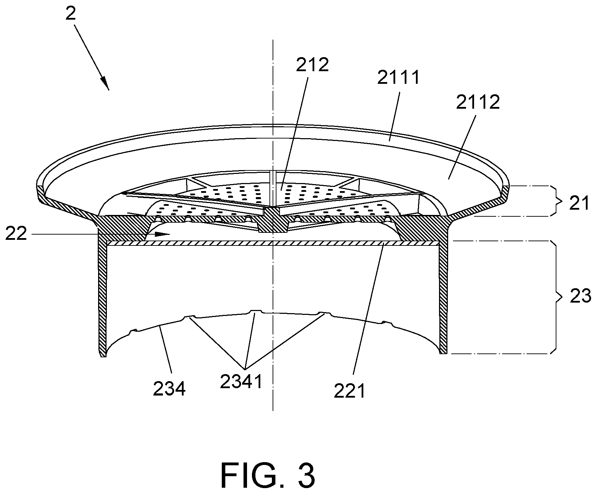

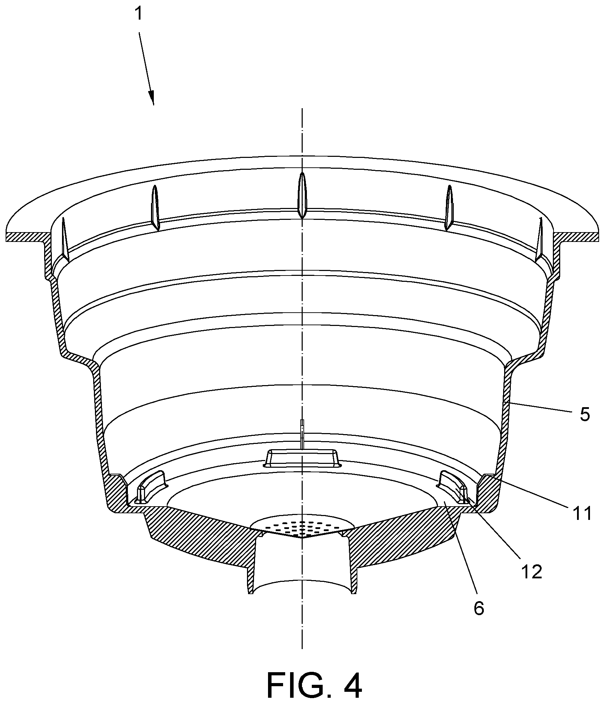

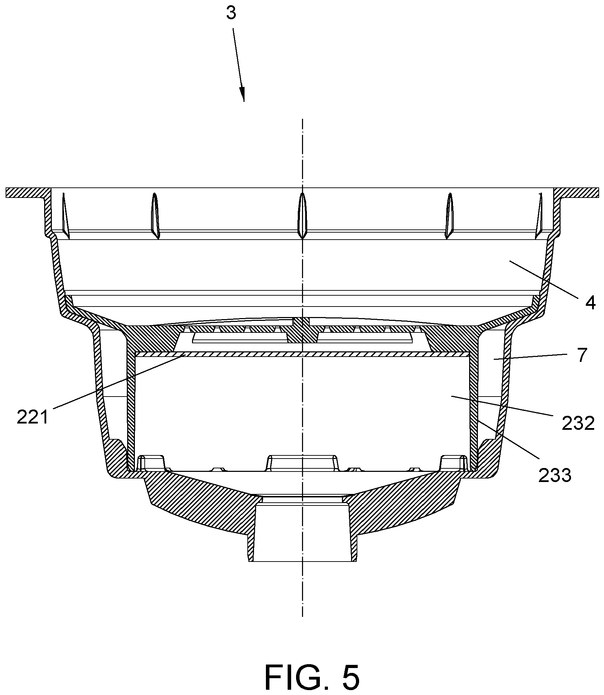

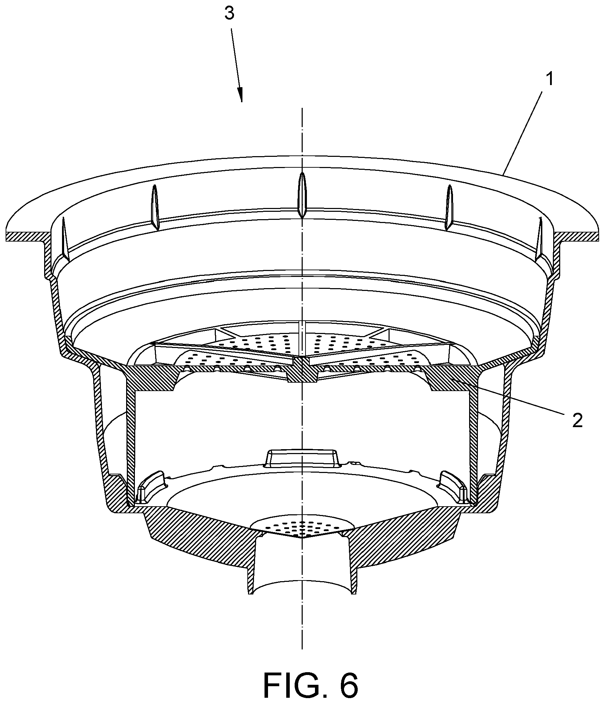

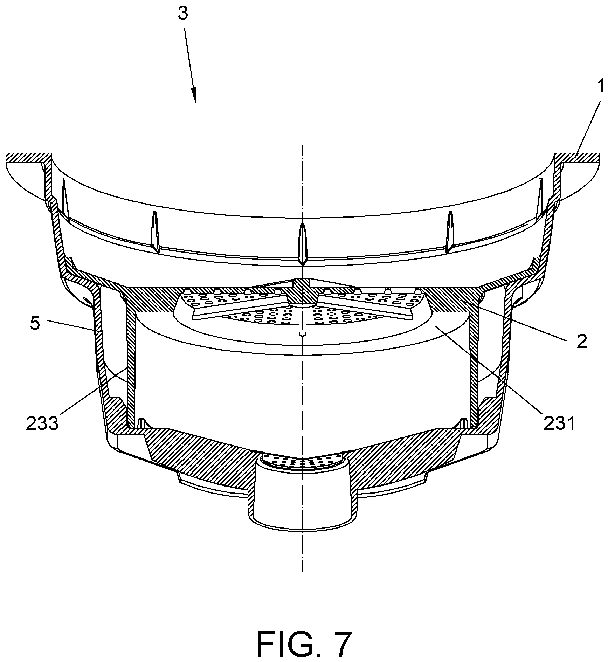

Figures 1 to 7 show various perspective and cross-section views of a preferred embodiment of the present capsule (3) structure for preparing beverages.

The filter plate (2) comprises at least three differentiated areas, namely: a filtering area (21), an inner chamber (22) and a lower area (23).

The alimentary substance is located above the filter plate (2), in a holding chamber (4) for said alimentary substance.

The geometry of the filtering area (21) comprises a wall (211) with two frustoconical segments, one upper segment (2111) and one lower segment (2112), the generatrices of each one of them having a certain angle of inclination. The filtering area (21) is open on the top and its bottom ends in a base (212) whose central area (2122) comprises a plurality of holes (213), whose cross-section is preferably frustoconical, through which the liquid mixed with the alimentary substance passes into the inner chamber (22).

Between the lower segment (2112) of the wall (211) of the filtering area (21) and the center of the base (212) of the filtering area (21) there is a ring-shaped area (2123) of the base (212), located at a lower level than the central area (2122) of the base (212) that comprises the holes (213).

Through the base (212) of the filtering area (21) run several radial ridges (2121) of said filtering area (21). Said radial ridges (2121) run across the base (212) of the filtering area (21), from its wall (211) to the center of the base (212), and are shaped like divisional walls with an edge that protrudes both above the base (212) of the filtering area (21), and below the base (212) of the filtering area (21) now inside the inner chamber (22). The edge of said radial ridges (2121), which protrudes above the central area (2122) of the base (212) of the filtering area (21), is convex, so as to make the filtering area (21) more robust against the deformations in the base (212) of the filtering area (21) that the high pressure generated inside the holding chamber (4) of the capsule (3) tends to cause, when the capsule (3) is injected with liquid under pressure.

Likewise, there are ribs (2124) that run through the base (212) of the filtering area (21), only in the aforementioned ring-shaped area (2123) of the base (212). The geometry of said ribs (2124) is like a dividing wall, and they are distributed radially and alternating with the radial ridges (2121).

The upper segment (2111) and a section of the lower segment (2112) of the wall (211) of the filtering area (21) is set upon the internal wall (5) of the external container (1) of the capsule (3), fitting into the geometry of said internal wall (5).

The lower section of the inner chamber (22) typically comprises a membrane (221), which separates said inner chamber (22) from the lower area (23) of the filter plate (2). Said membrane (221) is sealed over a ring-shaped lip (231) located in the upper section of the lower area (23) of the filter plate (2). The membrane (221) is designed to break under the effect of an increase in pressure in the inner chamber (22), when the pressure in said inner chamber (22) reaches a certain level.

The inner chamber (22) typically comprises a mixture of aromas. As the alimentary beverage passes through said inner chamber (22), it is impregnated with said aromas before going on to the lower area (23) of the filter plate (2), following the breakage of the membrane (221) that delimits from below the inner chamber (22).

The geometry of the lower area (23) comprises an internal space (232), a side wall (233), typically cylindrical in shape, which is open on its lower end, with an edge (234) that is set upon the bottom (6) of the external container (1), and is inserted between several ridges (11) and several teeth (12) located on the bottom (6) of the external container (1).

Between the filter plate (2) and the internal wall (5) of the external container (1) of the capsule (3), there is an air chamber (7) delimited from above by the lower segment (2112) of the wall (211) of the filtering area (21), from the side by the side wall (233) of the lower area (23) of the filter plate (2) and from below by the bottom (6) of the external container (1).

The edge (234) of the lower area (23) comprises a plurality of openings (2341) that connect the internal space (232) of the lower area (23) of the filter plate (2) to the air chamber (7).

The purpose of said openings (2341) is to keep a pressure gradient from forming between the internal space (232) of the lower area (23) of the filter plate (2) and the air chamber (7). Thanks to these openings (2341), the pressure between the lower area (23) of the filter plate (2) and the air chamber (7) is leveled, when the alimentary mixture under pressure floods the lower area (23) of the filter plate (2). This avoids stress that might cause the filter plate (2) to move with respect to the external container (1).

The bottom (6) of the external container (1) comprises, as has been mentioned, several ridges (11) and several teeth (12) between which the edge (234) of the side wall (233) of the lower area (23) of the filter plate (2) is inserted. The ridges (11) are joined to the internal wall (5) of the external container (1) and the teeth (12) are located on the bottom (6) of the external container (1), arranged internally and concentrically with respect to the ridges (11).

The number of the openings (2341) in the edge (234) of the lower area (23) of the filter plate (2) is such that there are always openings (2341) that are not obstructed by the aforementioned ridges (11) and teeth (12) of the external container (1).

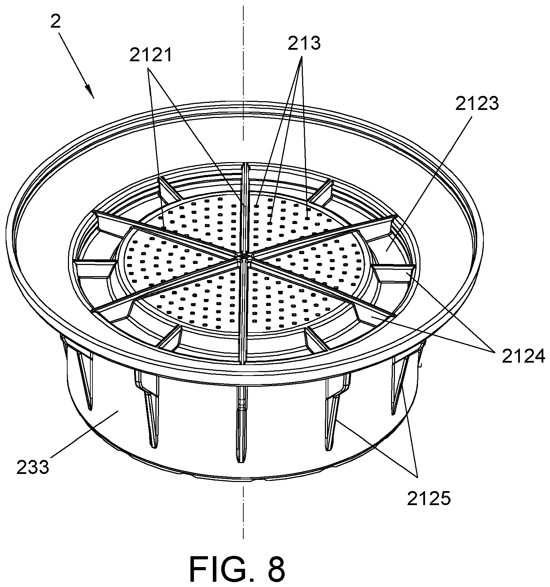

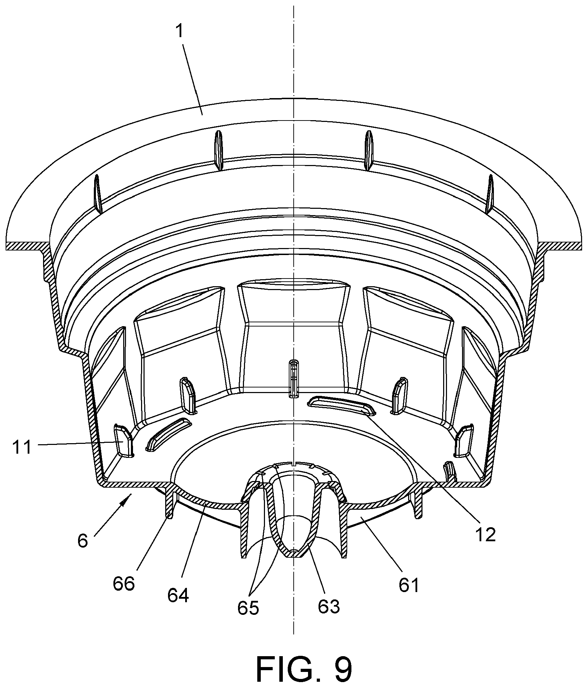

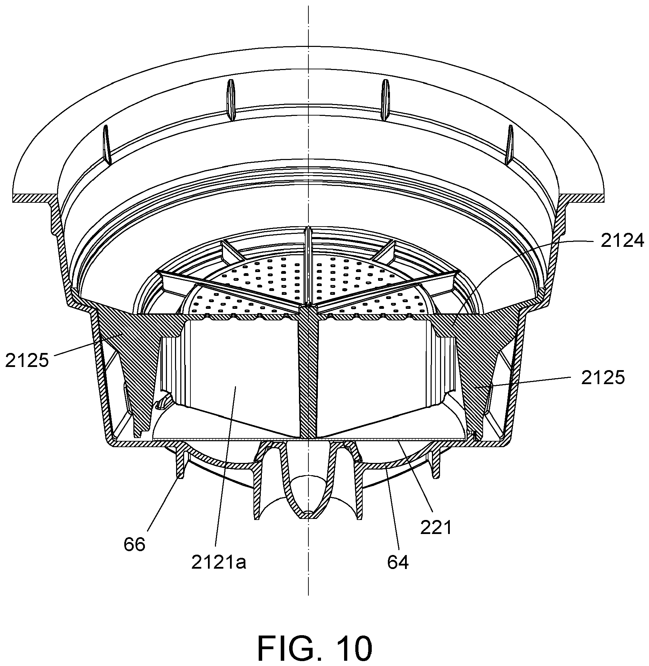

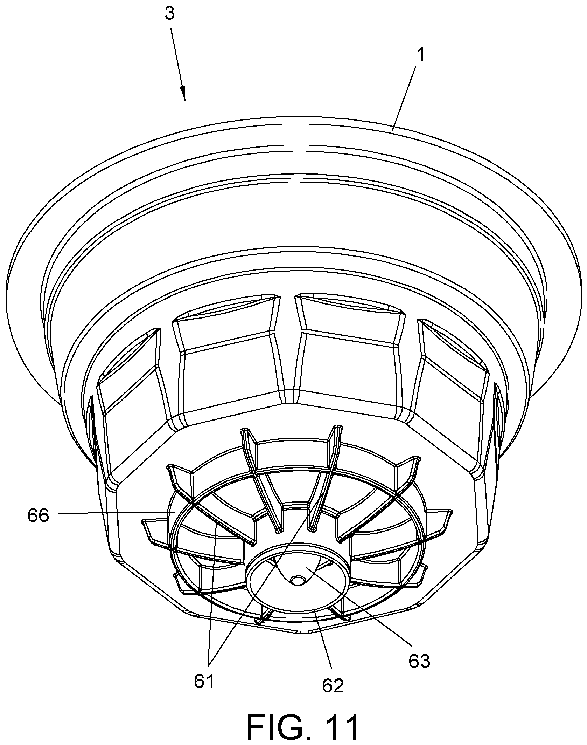

Figures 8 to 11 show various views of a second exemplary embodiment of the capsule (3) structure for preparing beverages in this invention.

This example is similar to the previous one, except that in this case the lower area (23) of the filter plate (2) constitutes the inner chamber (22) itself. To this end, the membrane (221) is sealed over the bottom (6), instead of over the lip (231), such that in this case, the membrane (221) also delimits the inner chamber (22). In addition, in this embodiment, the radial ridges (2121) that run across the base (212) of the filtering area (21), from its wall (211) up to the center of the base (212) and protruding both above the base (212) of the filtering area (21) and below the base (212) of the filtering area (21), it is provided that, instead of protruding below and penetrating partially into the lower area (23), they penetrate (2121 a) all the way through the lower area (23) such that the lower edge of the radial ridges (2121) is at the same level as the edge (234) of said lower area (23), thus providing greater rigidity for the inner chamber (22), as has already been explained above.

In this embodiment the external face of the bottom of the external container (1) comprises a plurality of radial reinforcement ridges (61), which begin at the spout (62) of the product, the inside of which comprises a pointed tip (63) that protrudes upwardly of a concavity (64) in the bottom (6) and laterally to which it comprises a plurality of holes (65) through which the obtained beverage exits. The radial ridges (61) are connected by a concentric circular ridge (66) that provides greater rigidity. Obviously, this configuration may also be presented by the embodiment in figures 1 to 8.

The radial ridges (2121) and the ribs (2124) extend along the lower face of the lower frustoconical segment (2112) of the wall (211) according to several brackets (2125), without reaching the upper frustoconical segment (2111) of said wall (211), and also extend along the outside of the side wall (233) of the lower area (23) without reaching its edge (234), thus providing greater reinforcement. It is worth pointing out that the brackets (2125), in the case of the ribs (2124), also extend along the inside of the side wall (233) of the lower area (23), providing greater rigidity.

In either of the embodiments, it is provided that the membrane comprises microperforations with passages of any sort of geometry through which the beverage exits, in order to facilitate the exit of the beverage without having to break the membrane (221) under the effect of said pressure in the inner chamber (23).

In this case, optionally it is possible to supply the capsule in sealed containers to preserve its air-tightness until use.

The present invention shall not be limited to the preferred embodiments described herein. Other embodiments that slightly modify the geometry of the elements that make up the structure herein described may be carried out by those skilled in the art, without prejudice to the generality of the invention described in the present document.

Accordingly, the present invention is hereby defined by the following claims.

## Claims

1. Capsule (3) structure for preparing beverages, of the type of capsules (3) into which a liquid is injected under pressure, comprising an external container (1) of the capsule (3) and a filter plate (2), which is set inside of said external container (1) and fits into the geometry of said external container (1), wherein the external container (1) comprises a holding chamber (4) of an alimentary product below which the filter plate (2) is located, wherein the external container (1) comprises an internal wall (5) and a bottom (6), wherein the filter plate (2) comprises at least a filtering area (21) that is open on the top, with a wall (211) that is set upon the interior wall (5) of the external container (1) and a base (212) that comprises a plurality of holes (213);
**characterized in that** :
- the filter plate (2) comprises at least:
▪ an inner chamber (22), located immediately below the filtering area (21), into which the liquid mixed together with the alimentary product enters through the holes (213) of the filtering area (21), wherein said inner chamber (22) is delimited from below by a membrane (221), designed to break under the effect of pressure, when the pressure inside said inner chamber (22) reaches a certain level;
▪ a lower area (23), the top section of which comprises a lip (231) and a hollow geometry with an interior space (232), a side wall (233) and an edge (234) of said side wall (233), which is set upon the bottom (6) of the external container (1);
- the external container (1) comprises, internally, on its bottom (6), several ridges (11) and several teeth (12), the ridges (11) being joined to the internal wall (5) of the external container (1), and the teeth (12) are located on the bottom (6) of the external container (1), arranged concentrically with respect to the ridges (11);
wherein:
- the edge (234) of the side wall (233) of the lower area (23) of the filter plate (2) is inserted between said ridges (11) and said teeth (12) on the bottom (6) of the external container (1), such that the filter plate fits tightly (2) between said ridges (11) and said teeth (12);
- the base (212) of the filtering area (21) of the filter plate (2) comprises a plurality of radial ridges (2121), which run radially across the base (212) of the filtering area (21), from the wall (211) of the filtering area (21) to the center of the filtering area (21), wherein the geometry of said radial ridges (2121) is like a dividing wall with an edge that protrudes above the base (212) of the filtering area (21) and an edge that protrudes below the base (212) of the filtering area (21), such that said radial ridges (2121) penetrate into the inner chamber (22) of the filter plate (2)
- the base (212) of the filtering area (21) of the filter plate (2) is divided into two areas:
• a central area (2122), which comprises the holes (213);
• a ring-shaped area (2123), between the central area (2122) and the wall (211) of the filtering area (21), located at a lower level than the central area (2122) of the base (212) and through which the radial ridges (2121) run.

2. Capsule (3) structure for preparing beverages according to claim 1, **characterized in that** the membrane (221) that delimits the inner chamber (22) is sealed over a location chosen between the lip (231), provided in the top section of the lower area (23), such that the membrane (221) separates the lower area (23) from the inner chamber (22); and a location over the bottom (6), such that the inner chamber (22) is constituted by the lower area itself (23).

3. Capsule (3) structure for preparing beverages according to claim 2, **characterized in that** the radial ridges (2121) penetrate into the inner chamber (22) of the filter plate (2) till a depth to be chosen between partial penetration, when the membrane (221) is sealed over the lip (231) and a penetration (2121 a) down through the lower area (23), when the membrane (221) is sealed over the bottom (6);

4. Capsule (3) structure for preparing beverages according to claim 1, **characterized in that**:
- the wall (211) of the filtering area (21) of the filter plate (2) comprises two frustoconical segments, one upper segment (2111) and one lower segment (2112), the generatrices of each one of them having a certain angle of inclination; and
- the geometry of the side wall (233) of the lower area (23) of the filter plate (2) is cylindrical.

5. Capsule (3) structure for preparing beverages according to claim 1, **characterized in that** between the filter plate (2) and the external container (1) of the capsule (3) there is an air chamber (7) delimited from below by the bottom (6) of the external container (1), from the side by the side wall (233) of the lower area (23) of the filter plate (2) and from above by the wall (211) of the filtering area (21) of the filter plate (2).

6. Capsule (3) structure for preparing beverages according to claim 5, **characterized in that** the edge (234) of the side wall (233) of the lower area (23) of the filter plate (2) comprises a series of openings (2341) to keep a pressure gradient from forming between the internal space (232) of the lower area (23) of the filter plate (2) and the air chamber (7).

7. Capsule (3) structure for preparing beverages according to claim 1, **characterized in that** the location of the ring-shaped area (2123) of the filtering area (21) corresponds to the lip (231) of the lower area (23) of the filter plate (2).

8. Capsule (3) structure for preparing beverages according to claim 1, **characterized in that** the geometry of the radial ridges (2121) is convex on the edge that protrudes above the central area (2122) of the base (212) of the filtering area (21).

9. Capsule (3) structure for preparing beverages according to claim 8, **characterized in that** the filter plate (2) comprises a plurality of ribs (2124) in the ring-shaped area (2123) of the base (212) of the filtering area (21), arranged radially and alternating with the radial ridges (2121).

10. Capsule (3) structure for preparing beverages according to claim 1, **characterized in that** the geometry of the cross-section of the holes (213) in the base (212) of the filtering area (21) is frustoconical.

11. Capsule (3) structure for preparing beverages according to claim 1, **characterized in that** the inner chamber (22) comprises a mixture of aromas which impregnate the alimentary beverage as it passes through said inner chamber (22).

12. Capsule (3) structure for preparing beverages according to claim 1, **characterized in that** the external container (1) and the filter plate (2) are made out of a plastic material.

13. Capsule (3) structure for preparing beverages according to claim 1, **characterized in that** the external face of the bottom (6) of the external container (1) comprises a plurality of radial reinforcement ridges (61).

14. Capsule (3) structure for preparing beverages according to claim 13, **characterized in that** the plurality of radial reinforcement ridges (61) on the bottom (6) of the external container (1), are connected by a concentric circular ridge (66).

15. Capsule (3) structure for preparing beverages according to claim 13, **characterized in that** the radial ridges (2121) and the ribs (2124) extend along the lower face of the lower frustoconical segment (2112) of the wall (211) according to several brackets (2125), without reaching the upper frustoconical segment (2111) of said wall (211), and also extend along the outside of the side wall (233) of the lower area (23) without reaching its edge (234).

16. Capsule (3) structure for preparing beverages according to claim 13, **characterized in that** the brackets (2125), in the case of the ribs (2124) also extend along the inside of the side wall (233) of the lower area (23).

## Patentansprüche

1. Kapselstruktur (3) zur Bereitstellung von Getränken, die von der Art von Kapseln (3) ist, in die eine Flüssigkeit unter Druck eingespritzt wird, mit einem Außenbehälter (1) der Kapsel (3) und einer Filterplatte (2), die im Inneren des Außenbehälters (1) eingesetzt und an die Geometrie des Außenbehälters (1) angepasst ist, wobei der Außenbehälter (1) eine Aufbewahrungskammer (4) eines Nahrungsmittelprodukts aufweist, unter welcher die Filterplatte (2) angeordnet ist, wobei der Außenbehälter (1) eine Innenwand (5) und einen Boden (6) aufweist, wobei die Filterplatte (2) zumindest einen an der Oberseite offenen Filterbereich (21) mit einer Wand (211) aufweist, die auf der Innenwand (5) des Außenbehälters (1) aufgesetzt ist, und mit einem Basiselement (21), das mehrere Löcher (213) aufweist;
**dadurch gekennzeichnet, dass**:
- die Filterplatte (2) zumindest aufweist:
eine Innenkammer (22), die unmittelbar unter dem Filterbereich (21) angeordnet ist, in die Flüssigkeit gemischt mit dem Nahrungsmittelprodukt über die Löcher (213) des Filterbereichs (21) eintritt, wobei die Innenkammer (22) von unten durch eine Membran (221) begrenzt ist, die so gestaltet ist, dass sie unter der Einwirkung von Druck bricht, wenn der Druck im Inneren der Innenkammer (22) einen gewissen Pegel erreicht;
einen unteren Bereich (23), dessen oberer Abschnitt eine Lippe (231) und eine hohle Geometrie mit einem Innenraum (232), eine Seitenwand (233) und eine Kante (234) der Seitenwand (233) aufweist, die auf dem Boden (6) des Außenbehälters (1) aufgesetzt ist;
- der Außenbehälter (1) im Inneren auf seinem Boden (6) mehrere Rippen (11) und mehrere Zähne (12) aufweist, wobei die Rippen (11) mit der Innenwand (5) des Außenbehälters (1) verbunden sind, und die Zähne (12) auf dem Boden (6) des Außenbehälters (1) positioniert und in Bezug zu den Rippen (11) konzentrisch angeordnet sind;
wobei:
- die Kante (234) der Seitenwand (233) des unteren Bereichs (23) der Filterplatte (2) zwischen die Rippen (11) und die Zähne (12) auf dem Boden (6) des Außenbehälters (1) eingeführt ist derart, dass die Filterplatte (2) formschlüssig zwischen den Rippen (11) und den Zähnen (12) eingepasst ist;
- das Basiselement (212) des Filterbereichs (21) der Filterplatte (2) mehrere radiale Rippen (2121) aufweist, die radial über das Basiselement (212) des Filterbereich (21) hinweg ausgehend von der Wand (211) des Filterbereichs (21) zum Mittelpunkt des Filterbereich (21) verlaufen, wobei die Geometrie der radialen Rippen (2121) wie eine Trennwand mit einer Kante, die aus dem Basiselement (212) des Filterbereich (21) nach oben hervorsteht, und mit einer Kante ist, die aus dem Basiselement (212) des Filterbereichs (21) nach unten hervorsteht, so dass die radialen Rippen (2121) in die Innenkammer (22) der Filterplatte (2) eintreten;
- das Basiselement (212) des Filterbereichs (21) der Filterplatte (2) in zwei Bereiche unterteilt ist:
einen zentralen Bereich (2122), der die Löcher (213) aufweist;
einen ringförmigen Bereich (2123), der zwischen dem zentralen Bereich (2122) und der Wand (211) des Filterbereichs (21) und auf einer tieferen Ebene angeordnet ist als der zentrale Bereich (2122) des Basiselements (212), und durch den die radialen Rippen (2121) verlaufen.

2. Kapselstruktur (3) zur Bereitstellung von Getränken nach Anspruch 1, **dadurch gekennzeichnet, dass** die Membran (221), die die Innenkammer (22) begrenzt, über einer Stelle versiegelt ist, die ausgewählt ist zwischen der Lippe (231), die in dem oberen Abschnitt des unteren Bereichs (23) vorgesehen ist, so dass die Membran (221) den unteren Bereich (23) von der Innenkammer (22) trennt; und einer Stelle über dem Boden (6) derart, dass die Innenkammer (22) durch den unteren Bereich selbst (23) gebildet ist.

3. Kapselstruktur (3) zur Bereitstellung von Getränken nach Anspruch 2, **dadurch gekennzeichnet, dass** die radialen Rippen (2121) in die Innenkammer (22) der Filterplatte (2) bis zu einer Tiefe eintreten, die zwischen einem teilweise erfolgenden Eindringen, wenn die Membran (221) über der Lippe (231) versiegelt ist, und einem Eindringen (2121a) nach unten durch den unteren Bereich (23) ausgewählt ist, wenn die Membran (221) über dem Boden (6) versiegelt ist.

4. Kapselstruktur (3) zur Bereitstellung von Getränken nach Anspruch 1, **dadurch gekennzeichnet, dass**:
- die Wand (211) des Filterbereichs (21) der Filterplatte (2) zwei kegelstumpfförmige Segmente aufweist, ein oberes Segment (2111) und ein unteres Segment (2112), deren Mantellinien jeweils einen gewissen Neigungswinkel haben; und
- die Geometrie der Seitenwand (233) des unteren Bereichs (23) der Filterplatte (2) zylindrisch ist.

5. Kapselstruktur (3) zur Bereitstellung von Getränken nach Anspruch 1, **dadurch gekennzeichnet, dass** zwischen der Filterplatte (2) und dem Außenbehälter (1) der Kapsel (3) eine Luftkammer (7) vorhanden ist, die von unten durch den Boden (6) des Außenbehälters (1), von der Seite durch die Seitenwand (233) des unteren Bereichs (23) der Filterplatte (2) und von oben durch die Wand (211) des Filterbereichs (21) der Filterplatte (2) begrenzt ist.

6. Kapselstruktur (3) zur Bereitstellung von Getränken nach Anspruch 5, **dadurch gekennzeichnet, dass** die Kante (224) der Seitenwand (233) des unteren Bereichs (23) der Filterplatte (2) eine Reihe von Öffnungen (2341) aufweist, sodass ein Aufbau eines Druckgradient zwischen dem Innenraum (232) des unteren Bereichs (23) der Filterplatte (2) und der Luftkammer (7) verhindert wird.

7. Kapselstruktur (3) zur Bereitstellung von Getränken nach Anspruch 1, **dadurch gekennzeichnet, dass** die Position des ringförmigen Bereichs (2123) des Filterbereichs (21) der Lippe (231) des unteren Bereichs (23) der Filterplatte (2) entspricht.

8. Kapselstruktur (3) zur Bereitstellung von Getränken nach Anspruch 1, **dadurch gekennzeichnet, dass** die Geometrie der radialen Rippen (2121) an der Kante, die aus dem zentralen Bereich (2122) des Basiselements (212) des Filterbereichs (21) hervorsteht, konvex ist.

9. Kapselstruktur (3) zur Bereitstellung von Getränken nach Anspruch 8, **dadurch gekennzeichnet, dass** die Filterplatte (2) mehrere Stege (2124) in dem ringförmigen Bereich (2123) des Basiselements (212) des Filterbereichs (21) aufweist, die radial und wechselnd zu den radialen Rippen (2121) angeordnet sind.

10. Kapselstruktur (3) zur Bereitstellung von Getränken nach Anspruch 1, **dadurch gekennzeichnet, dass** die Geometrie des Querschnitts der Löcher (213) in dem Basiselement (212) des Filterbereichs (21) kegelstumpfförmig ist.

11. Kapselstruktur (3) zur Bereitstellung von Getränken nach Anspruch 1, **dadurch gekennzeichnet, dass** die Innenkammer (22) eine Aromamischung aufweist, die das Nahrungsmittelgetränk imprägniert, wenn dieses die Innenkammer (22) durchläuft.

12. Kapselstruktur (3) zur Bereitstellung von Getränken nach Anspruch 1, **dadurch gekennzeichnet, dass** der Außenbehälter (1) und die Filterplatte (2) aus Kunststoffmaterial hergestellt sind.

13. Kapselstruktur (3) zur Bereitstellung von Getränken nach Anspruch 1, **dadurch gekennzeichnet, dass** die Außenfläche des Bodens (6) des Außenbehälters (1) mehrere radiale Verstärkungsrippen (61) aufweist.

14. Kapselstruktur (3) zur Bereitstellung von Getränken nach Anspruch 13, **dadurch gekennzeichnet, dass** die mehreren radialen Verstärkungsrippen (61) auf dem Boden (6) des Außenbehälters (1) durch eine konzentrische kreisförmige Rippe (6) verbunden sind.

15. Kapselstruktur (3) zur Bereitstellung von Getränken nach Anspruch 13, **dadurch gekennzeichnet, dass** die radialen Rippen (2121) und die Stege (2124) sich entlang der unteren Fläche des unteren kegelstumpfförmigen Segments (2112) der Wand (211) entsprechend zu mehreren Stützen (2125) erstrecken, ohne dass sie das obere kegelstumpfförmige Segment (2111) der Wand (211) erreichen, und sich ferner entlang der Außenseite der Seitenwand (233) des unteren Bereichs (23) erstrecken, ohne dessen Kante (234) zu erreichen.

16. Kapselstruktur (3) zur Bereitstellung von Getränken nach Anspruch 13, **dadurch gekennzeichnet, dass** die Stützen (2125) bei Vorhandensein der Stege (2124) sich auch entlang der Innenseite der Seitenwand (233) des unteren Bereichs (23) erstrecken.

## Revendications

1. Structure de capsule (3) pour préparer des boissons, de type de capsules (3) dans lesquelles un liquide est injecté sous pression, comprenant un récipient externe (1) de la capsule (3) et une plaque de filtre (2) qui est placée à l'intérieur dudit récipient externe (1) et s'adapte à la géométrie dudit récipient externe (1), dans laquelle le récipient externe (1) comprend une chambre de support (4) d'un produit alimentaire au-dessous de laquelle la plaque de filtre (2) est positionnée, dans laquelle le récipient externe (1) comprend une paroi interne (5) et un fond (6), dans laquelle la plaque de filtre (2) comprend au moins :
une zone de filtration (21) qui est ouverte sur le dessus, avec une paroi (211) qui est placée sur la paroi intérieure (5) du récipient externe (1) et une base (212) qui comprend une pluralité de trous (213) ;
**caractérisée en ce que** :
la plaque de filtre (2) comprend au moins :
une chambre interne (22) positionnée immédiatement au-dessous de la zone de filtration (21) dans laquelle le liquide mélangé conjointement avec le produit alimentaire entre par les trous (213) de la zone de filtration (21), dans laquelle ladite chambre interne (22) est délimitée de dessous par une membrane (221), conçue pour se casser sous l'effet de la pression, lorsque la pression à l'intérieur de ladite chambre interne (22) atteint un certain niveau ;
une zone inférieure (23), dont la section supérieure comprend une lèvre (231) et une géométrie creuse avec un espace intérieur (232), une paroi latérale (233) et un bord (234) de ladite paroi latérale (233), qui est placé sur le fond (6) du récipient externe (1) ;
le récipient externe (1) comprend, intérieurement, sur son fond (6), plusieurs crêtes (11) et plusieurs dents (12), les crêtes (11) étant assemblées à la paroi interne (5) du récipient externe (1), et les dents (12) sont positionnées sur le fond (6) du récipient externe (1), agencées de manière concentrique par rapport aux crêtes (11) ;
dans laquelle :
le bord (234) de la paroi latérale (233) de la zone inférieure (23) de la plaque de filtre (2) est inséré entre lesdites crêtes (11) et lesdites dents (12) sur le fond (6) du récipient externe (1), de sorte que la plaque de filtre s'adapte avec serrage (2) entre lesdites crêtes (11) et lesdites dents (12) ;
la base (212) de la zone de filtration (21) de la plaque de filtre (2) comprend une pluralité de crêtes radiales (2121) qui s'étendent radialement d'un côté à l'autre de la base (212) de la zone de filtration (21), à partir de la paroi (211) de la zone de filtration (21) jusqu'au centre de la zone de filtration (21), dans laquelle la géométrie desdites crêtes radiales (2121) est comme une paroi de division avec un bord qui fait saillie au-dessus de la base (212) de la zone de filtration (21) et un bord qui fait saillie au-dessous de la base (212) de la zone de filtration (21), de sorte que lesdites crêtes radiales (2121) pénètrent dans la chambre interne (22) de la plaque de filtre (2),
la base (212) de la zone de filtration (21) de la plaque de filtre (2) est divisée en deux zones :
une zone centrale (2122) qui comprend les trous (213) ;
une zone de forme annulaire (2123) entre la zone centrale (2122) et la paroi (211) de la zone de filtration (21), positionnée à un niveau plus bas que la zone centrale (2122) de la base (212) et à travers laquelle les crêtes radiales (2121) s'étendent.

2. Structure de capsule (3) pour préparer des boissons selon la revendication 1, **caractérisée en ce que** la membrane (221) qui délimite la chambre interne (22), est scellée sur un emplacement choisi entre la lèvre (231), prévue dans la section supérieure de la zone inférieure (23), de sorte que la membrane (221) sépare la zone inférieure (23) de la chambre interne (22) ; et un emplacement sur le fond (6), de sorte que la chambre interne (22) est constituée par la zone inférieure (23) elle-même.

3. Structure de capsule (3) pour préparer des boissons selon la revendication 2, **caractérisée en ce que** les crêtes radiales (2121) pénètrent dans la chambre interne (22) de la plaque de filtre (2) jusqu'à une profondeur à choisir entre la pénétration partielle, lorsque la membrane (221) est scellée sur la lèvre (231) et une pénétration (2121a) à travers la zone inférieure (23) lorsque la membrane (221) est scellée sur le fond (6).

4. Structure de capsule (3) pour préparer des boissons selon la revendication 1, **caractérisée en ce que** :
la paroi (211) de la zone de filtration (21) de la plaque de filtre (2) comprend deux segments tronconiques, un segment supérieur (2111) et un segment inférieur (2112), les génératrices de chacun d'entre eux ayant un certain angle d'inclinaison ; et
la géométrie de la paroi latérale (233) de la zone inférieure (23) de la plaque de filtre (2) est cylindrique.

5. Structure de capsule (3) pour préparer des boissons selon la revendication 1, **caractérisée en ce que**, entre la plaque de filtre (2) et le récipient externe (1) de la capsule (3), on trouve une chambre à air (7) délimitée de dessous par le fond (6) du récipient externe (1), du côté par la paroi latérale (233) de la zone inférieure (23) de la plaque de filtre (2) et du dessus par la paroi (211) de la zone de filtration (21) de la plaque de filtre (2).

6. Structure de capsule (3) pour préparer des boissons selon la revendication 5, **caractérisée en ce que** le bord (234) de la paroi latérale (233) de la zone inférieure (23) de la plaque de filtre (2) comprend une série d'ouvertures (2341) pour empêcher la formation d'un gradient de pression entre l'espace interne (232) de la zone inférieure (23) de la plaque de filtre (2) et la chambre à air (7).

7. Structure de capsule (3) pour préparer des boissons selon la revendication 1, **caractérisée en ce que** l'emplacement de la zone de forme annulaire (2123) de la zone de filtration (21) correspond à la lèvre (231) de la zone inférieure (23) de la plaque de filtre (2).

8. Structure de capsule (3) pour préparer des boissons selon la revendication 1, **caractérisée en ce que** la géométrie des crêtes radiales (2121) est convexe sur le bord qui fait saillie au-dessus de la zone centrale (2122) de la base (212) de la zone de filtration (21).

9. Structure de capsule (3) pour préparer des boissons selon la revendication 8, **caractérisée en ce que** la plaque de filtre (2) comprend une pluralité de nervures (2124) dans la zone de forme annulaire (2123) de la base (212) de la zone de filtration (21), agencées de manière radiale et alternant avec les crêtes radiales (2121).

10. Structure de capsule (3) pour préparer des boissons selon la revendication 1, **caractérisée en ce que** la géométrie de la section transversale des trous (213) dans la base (212) de la zone de filtration (21) est tronconique.

11. Structure de capsule (3) pour préparer des boissons selon la revendication 1, **caractérisée en ce que** la chambre interne (22) comprend un mélange d'arômes qui imprègne la boisson alimentaire au fur et à mesure qu'il passe à travers ladite chambre interne (22).

12. Structure de capsule (3) pour préparer des boissons selon la revendication 1, **caractérisée en ce que** le récipient externe (1) et la plaque de filtre (2) sont réalisés à partir d'une matière plastique.

13. Structure de capsule (3) pour préparer des boissons selon la revendication 1, **caractérisée en ce que** la face externe du fond (6) du récipient externe (1) comprend une pluralité de crêtes de renforcement radiales (61).

14. Structure de capsule (3) pour préparer des boissons selon la revendication 13, **caractérisée en ce que** la pluralité de crêtes de renforcement radiales (61) sur le fond (6) du récipient externe (1), sont raccordées par une crête circulaire concentrique (66).

15. Structure de capsule (3) pour préparer des boissons selon la revendication 13, **caractérisée en ce que** les crêtes radiales (2121) et les nervures (2124) s'étendent le long de la face inférieure du segment tronconique inférieur (2112) de la paroi (211) selon plusieurs supports (2125), sans atteindre le segment tronconique supérieur (2111) de ladite paroi (211), et s'étendent également le long de l'extérieur de la paroi latérale (233) de la zone inférieure (23) sans atteindre son bord (234).

16. Structure de capsule (3) pour préparer des boissons selon la revendication 13, **caractérisée en ce que** les supports (2125), dans le cas des nervures (2124), s'étendent également le long de l'intérieur de la paroi latérale (233) de la zone inférieure (23).
